# EUROPEAN PATENT APPLICATION

(11) **EP 3 845 703 A1**
(43) Date of publication of application: **07.07.2021**
(21) Application number: 20150117.8
(22) Date of filing: 02.01.2020
(51) Int. Cl.: D06L 4/40, B09B 3/00, D01G 11/00, D06M 16/00, D06M 11/05, D06L 1/00

(54) **PROCESS FOR APPLICATION OF CHEMICALS ON TEXTILE MATERIALS DURING REJUVENATION**

(71) Applicant: Nunn, Kayren Joy, Arlington TX 76017 (US)
(72) Inventor: Nunn, Kayren Joy, Arlington TX 76017 (US)
(74) Representative: Lecomte & Partners

(57) **Abstract**

A process for applying chemicals on textile materials to remove surface chemicals and finishes from said textile materials which comprises the following steps: reducing the textile materials to an appropriate size; applying a first catalyzed vapor treatment to the textile materials at a predetermined temperature to cleanse and strengthen the textile materials; penetrating the textile materials at a predetermined temperature to initially break the surface bond of the textile materials so that chemicals and/or enzymes in the catalyzed vapor treatment can begin to remove molecules of the surface chemicals and finishes from multi directions; applying a second catalyzed vapor treatment to the textile materials to further cleanse and strengthen the textile materials; blending the textile materials in one or more blending boxes; applying a third catalyzed vapor treatment to the textile materials in the one or more blending boxes and dwelling the fabric at a predetermined temperature for a predetermined period of time in the one or more blending boxes; and applying a blast of cool air to the one or more blending boxes to stop chemical actions in the textile materials.

## Description

### Technical Field

The present invention relates generally to a process that supports the "Method and System of Processing Waste Fabrics to Rejuvenate Fibrous Materials" in the rejuvenation of textile waste to cleanse surface chemicals from textile materials.

### Background Art

Of primary importance in the art of fiber rejuvenation is the ability to restore fabric to a new state. All fabrics, which are considered for rejuvenation, have gone through a series of chemical treatments prior processing for end use whether their origin is post -industrial scrap from textile cutting room floors, non-woven scrap cuttings, yarns from spinners or previously used textiles. These chemical processes may be as simple as a bleaching technique or as complex as starches or chemicals which set color and/or change texture, as well as intricate finishes which improve overall fabric performance such as ballistic finishes, flame retardants, silicones, cool technology and the like. When creating fibers of like quality from these scrap materials, it is important to bring them back to a virgin state by cleansing the surface chemicals from the fabric pieces.

Traditional means of cleansing fabrics for continued production are systems that "wash and dry" the fabrics, yarn or materials such as large vats for immersion or industrial washing machines followed by commercial gas or electric drying methods. Typical wash- and-dry methodology has proven to be environmentally hazardous and unsustainable. Moreover, wash-and-dry treatments add unnecessary cost to the process. In a wash-and-dry method described in US 6,378,179, enzymes are applied either by means of a high pressure wash or a bath in order to alter the surface properties of the fibers and render them hydrophilic if high absorbency is required in a hydroentangled product. Not only is this procedure extremely harsh to the fibers, but the resources expended in water and energy (process speed, appropriate drying, etc.) makes this approach costly and environmentally unsustainable.

Yet another disadvantage to the wash-and-dry method is that many fibers such as rayon, kapok, silk and PLA are unable to sufficiently tolerate water baths, however, the fact remains that their finishes must still be removed.

### Summary of the Invention

In one embodiment, the present invention relates to a process for applying chemicals on textile materials to remove surface chemicals and finishes from textile materials, with a view to maintain the integrity of the fibers of the textile materials.

To attain this, the process for application of chemicals on textile materials for removing surface chemicals and finishes from textile materials of the present invention comprises the following steps:
(1) reducing the textile materials to an appropriate size;
(2) applying a first catalyzed vapor treatment ("CVC No. 1") to the textile materials at a predetermined temperature to cleanse and strengthen the textile materials; the types of vapor used in CVC No. 1 can be a cellulase enzyme, a specialized organic surfactant, an organic or inorganic acid etc., depending on composition of the textile materials and finishes that have been applied to the textile materials;
(3) penetrating the textile materials, for example by means of two rotary drums having sleeves of industrial needles rotating counter clockwise, at a predetermined temperature to initially break surface bond of the textile materials so that chemicals of the catalyzed vapor treatment can begin to divide molecules of the surface chemicals and finishes from multi directions;
(4) applying a second catalyzed vapor treatment to the textile materials to further cleanse and strengthen the textile materials; the first catalyzed vapor treatment and the second catalyzed vapor treatment can be either the same or different;
(5) blending the textile materials in one or more blending boxes; more preferably, blending is conducted by a delivery condenser positioned over the one or more blending boxes and moving from left to right to deposit the textile materials into the one or more blending boxes in a z-type pattern until the one or more blending boxes are filled;
(6) applying a third catalyzed vapor treatment to the textile materials in the one or more blending boxes and dwelling the fabric at a predetermined temperature for a predetermined period of time in the one or more blending boxes; the preferred temperature in the one or more blending boxes should be between 68 F and 120 F, with an ideal temperature of 88 F for cotton rich fabrics; the preferred period of time is between 45 minutes to 24 hours;
(7) applying a blast of cool air to the one or more blending boxes to stop chemical actions in the textile materials and then transporting the textile materials to next station for further deconstruction processing. The first catalyzed vapor treatment, the second catalyzed vapor treatment and the third catalyzed vapor treatment are each prepared from enzymatic and organic chemicals which remove starches, silicone finishes, fabric softeners, repellents, flame retardants, permanent press finishes, foamers, defoamers and soil release agents, among others; or PCA, acrylic sizing agents, oiling waxes, silicone based lubricants, or a combination of these.

In comparison of the prior art which uses high pressure wash or water bath to apply enzymes to the textile materials, the essence of the present invention is the application of the treatment compositions (i.e. the catalyzed vapor treatment) in steam form, which can penetrate the very core of the textile materials for removing surface chemicals and finishes without damaging the fibers of the textile materials, and also causing less damage to the environment.

### Detailed Description

The present invention will be better understood with reference to the following detailed description.

In one embodiment, the processes described herein use a combination of steam and chemicals and/or enzymes, for example, to remove surface chemicals and/or treatments from textile materials before they are processed, for example, into individual fibers.

### Types of Textile Materials to be Treated

In one embodiment, the process uses textile materials which are, or which comprise, post-consumer and/or post-industrial waste. Such textile materials typically include finishes and other chemical treatments, and the processes described herein help remove these treatments/finishes. After the treatments/finishes are removed, the textile materials can optionally be deconstructed. The deconstruction process typically involves cutting the textile materials into smaller pieces, and forming fibers by using pins and/or needles to pierce the textile materials and form fibers. Once the textile materials have been cleaned of finishes/coatings, and cut and resized to form fibers, the fibers approximate virgin fibers.

In another embodiment, although treatment with one or more catalyzed vapor treatment compositions can be used remove surface treatments/finishes, the process can further involve applying one or more additional catalyzed vapor treatment compositions to apply surface treatments/finishes to the textile materials, and/or to the fibers formed by further processing the textile materials.

Examples of waste materials include:
a) non-conforming materials, defined as materials that do not meet their intended product use,
b) post-industrial textile waste, including slitter waste, pattern, cutting, and trim waste, yarn waste, ginning and carding waste, remnant, and numerous other stages of processing,
c) post-consumer waste, including various types of used product waste unsuitable for reuse in its current state. Examples of post-consumer waste include textiles, flooring (rugs and carpets), wood, leather, and the like.

The individual process steps, and components of the catalyzed vapor treatment compositions, are described in more detail below.

### Steam

As used herein, high temperature steam is steam that is hotter than the boiling point of water. Those of skill in the art can readily appreciate that there is a difference between saturated steam, slightly superheated steam and superheated steam, any of which can be used to treat the fibers and/or non-woven materials, and, optionally, to disinfect them. In one embodiment, the high temperature steam can be saturated steam, superheated steam, and anything in between. There are known correlations between the temperatures and pressures of the different types of steam, and those of skill in the art can select appropriate temperatures and pressures at which to treat the fibers and/or non-woven materials.

Superheated steam is "dry," so does not appreciably add to the moisture content of the textile materials being treated. Dry steam typically must reach much higher temperatures and the materials exposed for a longer time period to have the same effectiveness. Slightly superheated steam can be used, for example, for antimicrobial disinfection (see, for example, Song, L.; Wu, J.; Xi, C . (2012). "Biofilms on environmental surfaces: Evaluation of the disinfection efficacy of a novel steam vapor system". American Journal of Infection Control 40 (10): 926-930).

In one embodiment of a substantially closed system, the steam, whether saturated steam, slightly superheated steam, or superheated steam, is recirculated. Any steam that condenses during the process can optionally be discharged from the device.

Ideally, the contact time is such that the moisture content of the textile materials does not exceed about 15% by weight. If this moisture content is not exceeded, the materials may not need to be dried. If they are to be dried, the conditions of drying are selected subject to the product. Those skilled in the art can readily determine a suitable optimization on the basis of their normal expert knowledge. In most of the cases, the temperature will range between 150 and 500°C. The drying, if performed, can be carried out in a drying chamber. The steam passing through the textile materials, and, optionally, the steam coming from the drying chamber, can again be compressed and heated to a desired temperature and pressure, and returned to the steam disinfecting module. The injected steam ideally is food grade, and therefore in essence free from mineral oil, moisture droplets, microorganisms, and dirt.

As the steam is applied to the textile materials, such as through a nozzle, atomization and disinfection, and, in some embodiments, sterilization, takes place simultaneously, and in a substantially closed system the excess steam can be reused.

The steam, in one embodiment, is provided by a steam generator, which boils, for example, distilled or deionized water. In one aspect of this embodiment, the water is degassed prior to use, so that the steam contains few impurities and almost no non-condensing impurities.

The steam generator may be at any temperature above the final temperature, e.g., 150°C, as the thermal treatment of the droplets derives mainly from the latent heat of vaporization of the droplets, and very little from the absolute temperature of the steam. Preferably, the steam is saturated, which will define its temperature in a given atmosphere.

The steam can be derived from a boiler. Temperature control can require a high temperature boiler with a control valve near the point where the steam is applied to the fibers and/or non-woven materials. In other words, in order to ensure adequate flow of steam, an excess capacity should be available from the boiler. Control is effected near the point of application, to avoid time response delays or oscillation. The water in the boiler is preferably degassed to eliminate non-condensable components. The boiler can optionally include a superheater at its outlet, to heat the steam over a condensation equilibrium level .

The steam can injected into a treatment chamber and onto the textile materials, for example, through one or more steam injection ports/nozzles. Where two or more ports/nozzles are used, they can be spaced within the treatment chamber, so that the region distant from the fluid injection port maintains a relatively constant water vapor pressure. The walls of the reactor vessel can be maintained at least at or slightly above the final operating temperature, to avoid condensation of steam on the walls of the module. This may be accomplished by any suitable heating system.

A controlled dry steam cycle can be used at a predetermined temperature at a predetermined pressure based on the type of textile material, the batch size, and other relevant factors. For example, the controlled dry steam cycle may be for 5-300 minutes at between 100 to 300°F at 0-15 psi, more specifically, for 15-25 minutes at around 150° F at around 5 psi.

### Catalyzed Vapor/Catalyzed Vapor Composition/Catalyzed Vapor Treatment

As used herein, the terms "catalyzed vapor," "catalyzed vapor composition," and "catalyzed vapor treatment" are to be understood with respect to the following explanation.

The textile materials being treated can be opened up by exposure to steam, and then treated with one or more treatment compositions, for example, at one or more "treatment stations." Within any given treatment station, one or more treatments can be applied. The treatment compositions can be in the form of a vapor, droplets, a stream of liquid, a dispersion, and the like, though vapor can be preferred.

Collectively, a combination of steam and a chemical and/or enzymatic treatment is referred to herein as "catalyzed vapor treatment." Although the steam is not technically a catalyst, it opens up the fibers and allows them to receive the chemical and/or enzymatic treatments more efficiently. The water is added in the form of steam, and is removed as the fibers are later isolated, so is not a reactant per se. For this reason, the process has been termed "catalyzed vapor." In one embodiment, however, the chemical and/or enzymatic treatment is not applied with steam, but rather, in the form of a drench, spray, droplets, and the like.

Before the chemicals/enzymes are applied, the fibers can be opened up by applying high temperature steam. In one embodiment, the steam is hot enough that the residual heat evaporates the bulk of the water, and the fibers do not absorb sufficient water to raise their moisture content above around 15% by weight. In one aspect of this embodiment, the high temperature steam is ideally applied for a period of time sufficient to destroy any microbes that might be present.

In another embodiment and as appropriate to the product, an alcohol, such as isopropyl alcohol, is used an alternative to steam.

The treatments can serve one or more purposes, such as softening and relaxing twists in the waste materials, providing stain resistance, providing resistance to microbial contamination, providing color, fiber strengthening aids, oils to aid in anti-static formulation, nanotechnologyfor finishes on fabrics downstream, antimicrobials to kill microbial contaminants, and surfactants for personal care products.

The treatment compositions in the catalyzed vapor treatment (i.e., catalyzed vapor compositions) can include one or more of an enzyme, such as a cellulase, protease, lipase, pectinase, or amylase enzyme, a surfactant, which can be a cationic, anionic, zwitterionic, or nonionic surfactant, or a silicone treatment. The selection of the treatment depends on the type of nonwoven materials to be treated.

Chemicals that can be used include solvents, including organic solvents. These solvents can be water-miscible, or can be immiscible with water. Any industrial solvent that removes the surface chemicals/treatments can be used, though it may be desirable to recover and recycle any chlorinated solvents to minimize environmental exposure of these chemicals.

When the fibers in the textile materials are cotton fibers, the treatment composition can comprise a surfactant or an enzyme, such as a cellulase enzyme. When the fibers are derived from natural hair fabrics, such as cashmere or wool, or a polyester, nylon or polypropylene fiber, the treatment composition can comprise a poly (vinylamine- vinylformamide) copolymer, or other demulsifiers, optionally present in a suitable carrier. These compounds can prevent shrinkage and felting of wool or other natural hair fabrics.

In a further embodiment, the treatment composition comprises an antimicrobial application and/or a biocide.

The treatment processes applied in the various treatment stations can be designed to increase the strength of the fibers, to ensure they are not being weakened, or create additional breakage during the process.

Other treatments can also be applied, including those which increase the strength of the fibers, coloring treatments, disinfecting treatments, and the like.

The treatment or treatments can be applied to the textiles using one or more spray nozzles located above the textile materials to be treated or below a porous conveyor. As and after a treatment is applied, whether as a vapor, solution, dispersion, spray, and the like, a vacuum can be pulled below the conveyor, or above the non-woven materials to be treated, respectively, pulling the treatment through the materials to be treated. Excess treatment chemicals can be collected and recycled, if desired.

The process of the subject invention is now described in detail with reference to an exemplary embodiment. In this embodiment, the textile materials are first reduced to an appropriate size by a guillotine or similar cutter. As an example, the textile materials can be reduced to rectangular pieces of no wider than 6 inches and no longer than 8 inches; alternatively, the textile materials can be reduced to square pieces of no larger than 8 inches square. The reduced textile materials are then transferred by a conveyor to a first chamber in which a first catalyzed vapor is applied, e.g. by means of nozzles, to the textile materials to cleanse and strengthen the textile materials. Additionally, the emission of catalyzed vapor also promotes natural untwisting of the textile materials by relaxing and softening them, which eliminates fraying. Depending on the nature of the textile materials, the first catalyzed vapor used in the first chamber can be a cellulase enzyme, a specialized organic surfactant, an organic or inorganic acid, etc., and is emitted onto the textile materials via a catalytic steam chamber where the materials are carried thru the chamber gently on a motor driven perforated belt.

After the textile materials are treated, they can then be conveyed to a second chamber in which the textile materials are penetrated by pins, needles or other thin, sharp objects which can tear up the textile materials into fibers. In one embodiment, the penetration is performed using two or more rotary drums having sleeves of industrial needles rotating counter clockwise.

The penetration can be performed at a predetermined temperature to initially break surface bond of the textile materials so that chemicals and/or enzymes in the catalyzed vapor can begin to remove molecules in the surface chemicals and finishes from multiple directions. Unlike conventional rotary drums disposed with tearing pins to tear the textile materials apart and thus damage the fabric of the textile materials, the needles on the rotary drums in this embodiment resemble knife blades which cut through to the yarn segments and divide the yarn segments into long pieces of yarn.

The second chamber can be provided with an external temperature gauge to constantly monitor the temperature of the second chamber, and the temperature of the second chamber can be adjusted by means of air, water or refrigerant, depending on the nature of the textile materials being processed. As an example, a thermostat can be disposed in the second chamber to monitor the temperature therein, and once the temperature of the second chamber exceeds a predetermined level, the temperature of the second chamber can be adjusted by means of air, water or refrigerant.

After the textile materials leave the second chamber, the textile materials can then optionally be conveyed to a third chamber, in which a second catalyzed vapor is applied to the textile materials, e.g. by means of nozzles, to further cleanse and strengthen the textile materials. The first catalyzed vapor and the second catalyzed vapor can be either the same or different, depending on the nature of the textile materials being processed.

In one embodiment, the textile materials are then transported, preferably by negative pressure (i.e., using a vacuum), to a set of large blending boxes for blending. In this embodiment, the blending boxes are each approximately ten feet wide and forty feet long; blending can be conducted, for example, by a delivery condenser positioned over the set of blending boxes and moving from left to right to deposit the textile materials into the set of blending boxes until the blending boxes are filled. The deposition of the textile materials can be performed, for example, in a z-type pattern.

In one embodiment, a third catalyzed vapor is then applied to the textile materials in the blending boxes. This third catalyzed vapor can be either the same or different from the second catalyzed vapor. The textile materials are then maintained at a predetermined temperature for a predetermined period of time in the one or more blending boxes to promote the continuous release of surface chemicals and finishes present on the materials into the production process. The preferred temperature in the set of blending boxes is between about 68°F and 120°F, with an ideal temperature of 88°F for cotton rich fabrics. The preferred period of time is between 45 minutes and 24 hours.

Because, in one embodiment, steam is applied to the fibers rather than water, the process can be referred to as "semi-dry." The steam can be high-pressure steam as described herein.

At the end of the predetermined dwell time, the semi-dry removal of the surface chemistry will be essentially complete. A signal can be used to signify that the predetermined dwell time is over, and that the textile materials are to be moved to a subsequent station for further processing.

In some embodiments, the chemicals and/or enzymes in the catalyzed vapor composition essentially cease to remove surface chemicals/treatments when they are cooled below a particular temperature. Further, there can be a balance between enzymes, particularly cellulase enzymes when applied to cellulosic textile materials, removing surface treatments, and dissolving the textile materials themselves. Accordingly, it can be desirable to cool the textile materials once the surface chemicals/treatments are removed so as to prevent any unwanted degradation of the textile materials such as might occur on further exposure to the chemicals/enzymes at elevated temperatures.

In one aspect of this embodiment, the textile materials are cooled using a blast of cool air. The cool air can be directed into one or more of the blending boxes to stop the action of the chemicals/enzymes. The textile materials can then optionally be removed from the area, for example, using negative pressure. As an example, when the textile materials are removed from the blending boxes to ductwork, which ductwork can be coated with polyurethane (PU), a refrigerated station can be placed at the beginning of the ductwork, which refrigerated station is configured to cool the textile materials. The textile materials can then travel through the ductwork to a subsequent station for further processing, such as deconstruction, if desired.

Additional process steps include one or more of the following: penetrating the textile materials with pins, needles, or other suitable sharp objects to break down the textiles into individual fibers, carding the fibers, applying one or more surface treatments to the fibers, decontaminating the fibers, blending the fibers with other fibers, and forming woven or non- woven materials using the fibers.

According to the above disclosure, a person skilled in the art can make suitable modifications and changes to the above embodiments. Therefore, the present invention is not limited by the above disclosure and the embodiment described.

Modifications and changes to the present invention should fall within the scope of the present invention as defined by the claims. Besides, although certain technical terms have been used throughout the specification, the technical terms are intended for ease of explanation and are not intended to restrict the present invention in any way.

## Claims

1. A process for applying chemicals on textile materials to remove surface chemicals and finishes from said textile materials which comprises the following steps:
(1) reducing the textile materials to an appropriate size;
(2) applying a first catalyzed vapor treatment to the textile materials at a predetermined temperature to cleanse and strengthen the textile materials;
(3) penetrating the textile materials at a predetermined temperature to initially break the surface bond of the textile materials so that chemicals and/or enzymes in the catalyzed vapor treatment can begin to remove molecules of the surface chemicals and finishes from multi directions;
(4) applying a second catalyzed vapor treatment to the textile materials to further cleanse and strengthen the textile materials;
(5) blending the textile materials in one or more blending boxes;
(6) applying a third catalyzed vapor treatment to the textile materials in the one or more blending boxes and dwelling the fabric at a predetermined temperature for a predetermined period of time in the one or more blending boxes;
(7) applying a blast of cool air to the one or more blending boxes to stop chemical actions in the textile materials.

2. The process of Claim 1, wherein the treated textile materials are then transported to a subsequent station for further processing.

3. The process of Claim 1, wherein in step (2), the first catalyzed vapor treatment comprises a cellulase enzyme.

4. The process as in Claim 1, wherein in step (3), the textile materials are penetrated by means of two rotary drums having sleeves of industrial needles rotating counter clockwise.

5. The process as in Claim 1, wherein in step (4), the first catalyzed vapor treatment combination of enzymatic and organic chemicals and the second catalyzed vapor treatment can be the same or different.

6. The process as in Claim 1, wherein in step (5), blending is conducted by a delivery condenser positioned over the one or more blending boxes and moving from left to right to deposit the textile materials into the one or more blending boxes in a z-type pattern until the one or more blending boxes are filled.

7. The process as in Claim 1, wherein in step (6), the third catalyzed vapor treatment can be either the same or different from the second catalyzed vapor treatment.

8. The process as in Claim 1, wherein in step (6), the temperature in the one or more blending boxes is between 68°F and 120°F.

9. The process as in Claim 1, wherein in step (6), the predetermined period of time is between 45 minutes to 24 hours.

10. The process as in Claim 1, wherein the first catalyzed vapor treatment, the second catalyzed vapor treatment and the third catalyzed vapor treatment each comprise one or more compounds selected from the group consisting of enzymatic and organic chemicals which remove starches, silicone finishes, fabric softeners, repellents, flame retardants, permanent press finishes, foamers, defoamers and soil release agents, PCA (polycarboxylic acid), acrylic sizing agents, oiling waxes, silicone based lubricants, and combinations thereof.

11. The process of Claim 2, wherein the first combination of enzymatic and organic chemicals further comprises an organic surfactant, an organic acid, or an inorganic acid.

12. The process of Claim 7, wherein the textile is a cotton-rich fabric, and wherein the temperature in the one or more blending boxes is around 88°F.
